# EUROPEAN PATENT APPLICATION

(11) **EP 1 430 784 A1**
(43) Date of publication of application: **23.06.2004**
(21) Application number: 02080628.7
(22) Date of filing: 20.12.2002
(51) Int. Cl.: A23G 1/20, A23G 3/02, A22C 7/00, A23P 1/10

(54) **Apparatus for pressing edible articles, such as of chocolate**

(71) Applicant: AASTED-MIKROVERK APS, 3520 Farum (DK)
(72) Inventor: Refer, Jacob Christian, 3000 Helsingoer (DK)
(74) Representative: Heiden, Finn

(57) **Abstract**

Apparatus for pressing edible articles (20) comprising a holding device (8,17) with at least one channel (10,26) for circulation of cooling liquid and carrying solid plungers (11,16,28) having a lower part (18) with pressing surfaces (13) to be pressed into contact with the chocolate mass. The plungers also have upper cone-shaped parts (14,21) fitting into engagement with corresponding cone-shaped openings (22) in the holding device. An optimal transfer of cooling from the circulating liquid and to the chocolate is achieved through the engaged surfaces. Gaps between the upper plunger parts and the holding device are eliminated and consequently also any loss in transfer of cooling in such a gap. In engagement the holding device and the plunger parts then reacts as one unit of material transferring the cooling.

## Description

The present invention concerns apparatuses for pressing of edible articles comprising a holding device with at least one cooling channel and carrying a number of cooled plungers which is pressed into the mass. Many types of mass may apply as long as the mass is capable of reaching a deformable state before being pressed into shape. Chocolate mass, whether it is in a highly liquid state, a thick paste-like, viscous state or in a powder form may for example apply. The chocolate mass may have a content of genuine cocoa butter or simply be a so-called chocolate-like mass by which the butter is substituted with other kinds of fats or oils such as palm-kernel oils. Decisive is, that the particular mass in question is deformable by the pressing action of cooled plungers.

The mass may be deposited in underlying mould cavities or directly upon a conveyor belt before the pressing operation. The intention could also be to press or stamp a covering chocolate layer deposited upon a previously made edible article, such as a chocolate article or a biscuit. The covering layer to be pressed could for example be a bottom covering layer deposited upon a centre mass deposited into the inner cavity of a pre-made chocolate shell or a covering layer deposited upon a bar-shaped centre.

An inner chocolate layer on pre-made articles could also be made, for example by depositing tempered chocolate-like mass in an already made shell, optionally shaking the moulds, and then immersing cold plungers into the deposited mass for making shells with predetermined and even thickness. The first pre-made shell could be of one chocolate type such as ordinary milk chocolate and the inner chocolate layer made subsequently could be of another chocolate type, such as a white chocolate type.

When for example shells are to be made, the apparatus comprises a plate-like holding device carrying a number of cooled plungers to be immersed into underlying mould cavities in mould plates. In each mould cavity is deposited liquid chocolate, and by lowering the holding device, the plungers are simultaneously immersed into the chocolate in the different mould cavities. By the pressing action of the plungers, the chocolate mass is pressed into shells having the desired shape. Due to the cooling of the plungers a forced solidification of the influenced chocolate mass is achieved in contact therewith. The chocolate mass then contracts slightly and releases the pressing surfaces of the plungers which may be lifted up and free therefrom within seconds.

Generally, chocolate masses are suspensions of non-fat particles such as sugar, milk powders and cocoa solids mixed up with a liquid fat constituent. Often, the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the chocolate-like masses it is decisive, that whether the fat phase constitutes of genuine cocoa butter or substitutes thereof, the fat phase is capable of crystallizing into stable crystal types, such as the β-crystals developing in genuine cocoa butter when the mass solidifies.

Before being supplied in liquid state to the apparatus, the chocolate is typically being treated for providing stable beta-V crystals at solidification. The treatment could be a tempering process by which the mass is generally brought to around 40-50°C, where after it is being cooled to around 25-34°C, so that crystallisation is initiated. Then the mass is reheated around 0,5-2,0°C for re-melting most of the in-stable crystals in the mass, however preserving a content of stable βV-crystals, which melts at a higher temperature than the in-stable crystals. The stable crystals are preserved in the mass ready for depositing in an amount of typically 0,01% - 5%, preferably in an amount of 0,1% - 2%. Before being supplied the chocolate could also be treated by other processes such as cooling the chocolate to around 30-34°C, then seeding it with already made powder or suspension having a content of desirable beta V crystals for ensuring the solidification into desirable crystals.

After the shells made have solidified, they may be filled with a centre mass of a creamy or liquid food material, which differs from that of the shell material. The centre mass could be an alcohol containing mass, a sugar containing mass or a creamy fondant mass, simply any of the centre masses known to the chocolate industry. Finally, a chocolate covering layer may be deposited for closing the centre mass off, thereby creating a complete article. The articles could have any shape, size and configuration and could typically be "pralines", tablets, or slabs such as for example the well-known quadrangular slabs or tablets with all kind of centre masses, crunchy or creamy.

Advantageously, the chocolate covering layers can be pressed with an apparatus according to the invention, however, also chocolate covering layers deposited upon other types of edible articles may advantageously be pressed with the inventive apparatus. Edible articles such as bars, biscuits or bakery articles are generally excellent to provide with a chocolate covering layer being pressed by the inventive apparatus.

If a bottom covering layer is not created on a pre-made shell, the articles made by the apparatus could typically be figures or eggs or egg-like articles, which are created by joining together two chocolate shells with each other. Both shell halves may be made with the inventive apparatus, and a centre mass may be deposited before the halves are being joined. Instead of a centre mass the cavity between the joined shells could simply contain some kind of surprise, such as a small plastic container comprising kids toys inside the well-known "Surprise" eggs.

The apparatus according to the invention may also be utilised for pressing edible articles directly upon a planar surface of a mould-less conveyor. The articles are then typically brick, coin or plate-like in shape.

WO 98/52425 (KMB, Knobel) discloses an apparatus having numerous plungers permanently screwed on to a carrier or holding plate. The inner of the plungers are flushed through by cooling liquid. This technique is possible when relatively large diameter plungers are used being permanently fixed without any possibility of independent movements between the plungers and the holding plate. The plungers can not be removed from the holding device without first draining out the cooling liquid from the carrier. When the plungers are removed, for example for inspection or renewal the openings into the inner of the carrier and the cooling circuit are laid open. After having replaced the plungers cooling liquid must again be supplied, and the circuit must be tested before use. The manufacture of these plungers having inner cavities are furthermore cumbersome and expensive.

EP 0923876 A discloses an apparatus of the introductory type and by which the independently suspended plungers are made in one solid piece with the same cross-sectional, cylindrical shape in all of their length. The upper part of each plunger comprises sliding surfaces and is arranged vertically movable in a hole in the holding device. Sliding surfaces of the upper part is then supported by opposite sliding surfaces of the hole in the holding device. The sliding surfaces transmits cooling from the holding device and to the pressing surfaces for cooling the warmer chocolate when being pressed. Each plunger may be further supported by an upper slim slide guidance. Between the outer cylindrical surfaces of the plungers and the opposite, cylindrical sliding surfaces of the holding device is however a ring-shaped gap present. Though the width of the gap is very small, typically tenths of a millimetre, a certain loss in cooling capacity is suspected in the gap.

As each holding device typically carries between 50 and 200 plungers depending on the size of the articles to be pressed it becomes important to reduce the loss of cooling capacity transferred from the cooling liquid and to each of the pressed chocolate articles during continuous production.

For the manufacturer of the chocolate articles it is furthermore crucial to his business to achieve as high capacity as possible of the apparatus, so that as many articles as possible are pressed within a given time period. Consequently, the apparatus must produce as many articles as possible per pressing operation, i.e. each time the holding device is lowered against the underlying mould or conveyor belt. For achieving this the cooling capacity must not set a bar to the otherwise obtainable pressing capacities.

A problem to solve is to provide an apparatus of the introductory art, which achieves a unique combination of improved cooling, and movable or detachable plungers.

According to the inventive solution, the upper parts of the plungers are cone shaped and fits into engagement with correspondingly cone shaped surfaces of the supporting openings in the holding device.

When the upper cone shaped parts of the plungers are in engagement with the correspondingly cone shaped surfaces of the supporting openings in the holding device, an optimal transfer of cooling from the circulating liquid and to the chocolate is achieved through the engaged surfaces. Gaps between the upper plunger parts and the holding device are eliminated and consequently also any loss in transfer of cooling in such a gap. In engagement the holding device and the plunger parts then reacts as one block of material to the transfer of cooling.

By cone-shaped is meant any shape of the particular surfaces which deviates from a cylindrical shape, such that the surfaces have an inclination to a central axis of the plungers. Preferably, the upper parts of plungers have the same angle of inclination or cone angle as the surfaces of the support openings in the holding device. The engagement then becomes a tight engagement which requires a certain force to disassemble. Thereby, the opposite cone shaped surfaces are in close and full contact so that the transfer of cooling through the engaged surfaces is optimal. Possible is however also, that the cone angles of the plungers differs slightly from the cone angles of the correspondingly shaped openings in the holding device. By slightly is meant deviations within around 1°. The plungers are then more easily released from the "squeezing" effect of the openings when being released.

The plungers are solid in the essence, that they are free from any cooling channels in connection with the cooling channels of the holding device.

Improvements in the size of between 26-40% of the cooling transfer capacity from the cooling liquid and to the chocolate is observed. The improvements are especially to the greater end when the temperatures of the plungers are low, such as lower than 0°C. Today even lower temperatures of the plungers such as around and lower than -10°C are desirable to operate with as very low pressing periods around 1-2 seconds are achieved so that a desirable high production capacity of the apparatus is achieved. However such low temperatures acquire especially efficient cooling of the plungers during all of the production. In this case it is especially important that the transfer of cooling energy from the cooling liquid and to the plungers are as efficient as possible as every loss gives rise to the need of more efficient cooling equipment, such as the capacity of the cooler keeping the low temperature of the cooling liquid constant and the capacity of the pump circulating the cooling liquid.

When plungers having smaller diameters, typically below 40-50 mm is to be used the expensive working of inner cooling channels in plungers becomes more and more impossible and the inventive idea is then especially advantageous. An optimal transfer of cooling is then preserved and the plungers may then even easily be removed or replaced without any precautions for closing off the channels for cooling liquid in the holding device as being necessary when flushed plungers are used.

When release means are arranged in the holding device for releasing the tight engagement between the outer cone shaped surfaces of the upper plunger parts and the inner cone shaped surfaces of the support openings it is possible to achieve maximum transfer of cooling and yet release the plungers easily when required.

Arranging the plungers independently suspended from the holding device requires that the release means are adapted to release the engagement between the cone-shaped surfaces before the plungers are immersed into the deposited chocolate mass. The plungers then works independently suspended during the pressing operation, so that each plunger is free to work independently of the other plungers and to take in its own height position determined by the actually deposited amount of chocolate and the actual chocolate accommodation volume of the corresponding mould cavity.

When the pressing operation is concluded, the plungers are withdrawn from the pressed articles as the holding device is lifted up. In that position intermediary two each other following pressing operations the retraction means retracts the plungers into tight engagement with the cone shaped surfaces of the supporting openings. Then the cooling transfer from the cooling liquid of the holding device and to the plungers are then optimal. The solid plungers then absorb as much cooling energy as possible in the engaged position and the plungers are so to say energized with cool before the next pressing operation. Thereafter, the release means releases the engagement between the cone-shaped surfaces and the plungers are free to move independently of each other during the subsequent pressing operation.

Both the release means and the retraction means could advantageously be in the form of cavities and surfaces on the plungers and on the opposite surfaces of the holding device influenced by pressurized air. The pressurized air may then act to press up the plungers into engagement and thereafter act to release the engagement before pressing.

A counter pressure may also be obtained in the engaged position of the plungers by arranging a spring or resilient gasket around the plungers. When the upwards force exerted by the pressurized air to the plungers in the engaged position then is released, the counter force of the spring means will secure disengagement of the upper plunger parts which is then free to move as independently suspended plungers during pressing.

An apparatus may for example comprise a first holding device having lower plunger parts with one configuration for making shells. However, the apparatus may also comprise a second holding device being identical to the first one apart from the fixed lower plunger parts now having the shape for pressing a chocolate covering layer as a bottom upon the pre-made chocolate shells.

The apparatus may comprise a closure plate having openings through which the lower plunger parts extends, and which is movably suspended below the holding device. When lowering the holding device during a moulding and pressing action the closure plate comes to rest upon the upper surface of the mould plate. Thereby a completely tight closure of the mould cavities are achieved before the holding plate and consequently the lower plunger parts are lowered further and under pressure causes the chocolate mass to completely fill out the moulding cavities. Subsequently cutting of the upper rims of the articles are then unnecessary and dirtying of the moulds and production facilities with cut-off particles of chocolate is then avoided.

When the apparatus comprises a housing surrounding the holding device and the plungers, the environment around the plungers and generally when the pressing operations are carried out can be controlled as desired. For example if an air drying device is arranged blowing dry air into the housing, the humidity in the housing can be controlled to a very low level so that no condensation is created on the plungers or the deposited chocolate to be pressed. This is especially advantageous when the temperature of the plungers are kept very low, for example at temperatures below 0°C.

The invention is explained further below by reference to preferred embodiments as well as the drawing, in which
fig. 1 is a schematical, perspective view of the apparatus according to the invention exemplified as part of a continuous production plant,
fig. 2 is a schematical view in vertical section of a holding device with plungers, which are lifted up and free from the chocolate mass,
fig. 3 is a schematical section of another embodiment of a holding device with independently suspended plungers depicted in an upper retracted position,
fig. 4 discloses schematically only one of the plungers of the holding device of figure 3 in a lower position immersed into a mould cavity making a shell,
fig. 5 is a further embodiment of a plunger, which is adapted to press on top of a covering layer deposited on top of the centre filling of a previously made chocolate shell, and
fig. 6 is yet another embodiment of a plunger adapted to press a coin-like or flat article upon a planar surface of a mould-less conveyor.

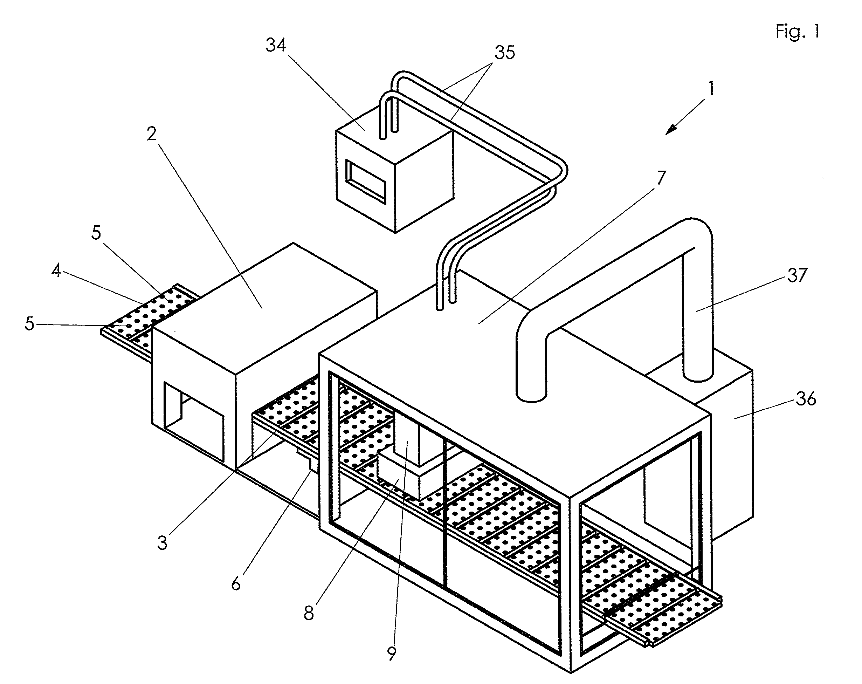

The apparatus 1 disclosed in figure 1 constitutes part of a major plant for manufacturing of chocolate articles. The apparatus 1 comprises a mass depositing station 2 .

A continuously moving conveyor 3 extends through the apparatus 1 and carries a great number of juxtaposed mould plates 4. For sake of simplicity is only disclosed the part of the conveyor 3 running through the apparatus. Subsequently to the apparatus is optionally arranged further treatment sections such as a further inventive apparatus and a cooling tunnel and a wrapping section.

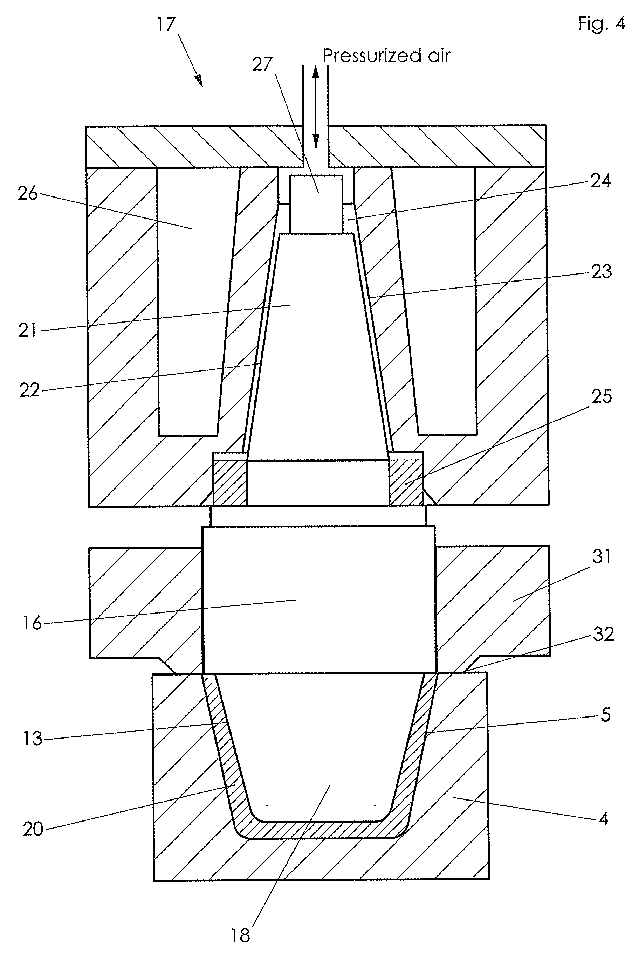

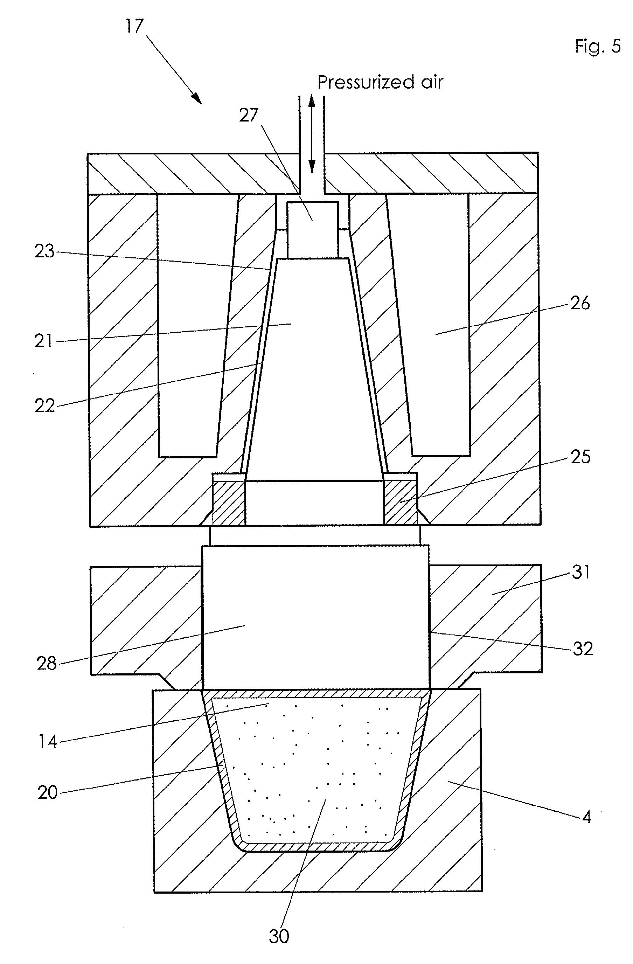

A schematically disclosed depositing section 2 comprises some kind of depositor means, which deposit the edible mass, for example ready tempered chocolate mass into the individual mould cavities 5 of each mould plate 4. Each mould plate 4 comprises typically between 50 and 200 mould cavities of which only one is disclosed for sake of clarity in figure 4 and 5. Each individual mould plate 4 is then carried on by the conveyor 3 and passes over a shaking table 6, which distributes the deposited chocolate evenly within the individual mould cavities 5.

Then the mould plates 4 enters the shell moulding or pressing housing 7, within which the deposited chocolate is pressed by the action of the plungers into shape of the desired articles. In the moulding housing 7 is arranged a schematically disclosed holding device 8. The holding device 8 is arranged with known means such as columns and slides 9, a motor for creating the movement and related control panels and software for controlling the up- and down movement of the holding device 8 each time it is in engagement with a mould plate 4 and shells are pressed in the mould cavities.

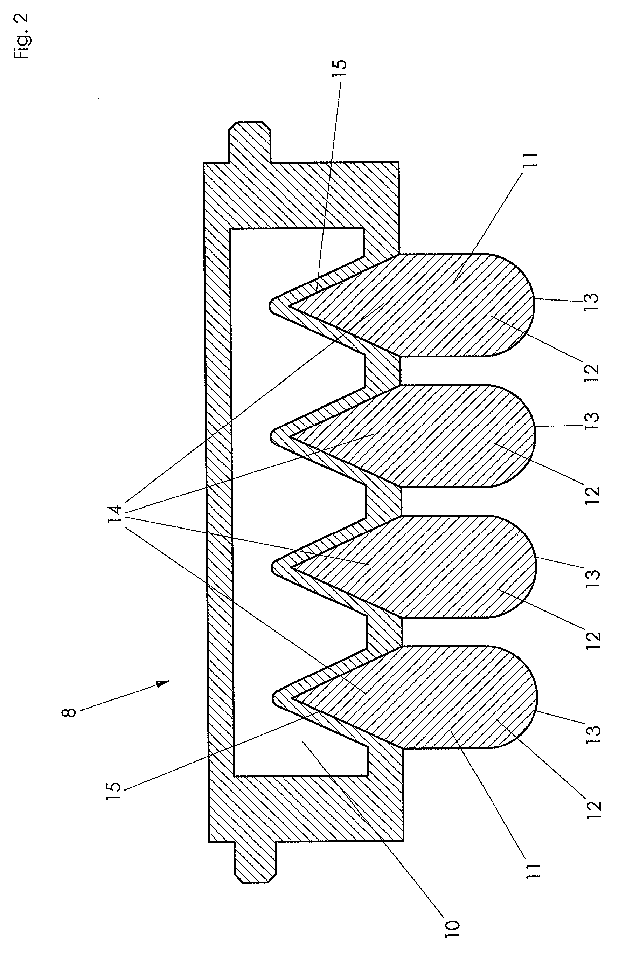

As disclosed in figures 2 the holding device 8 comprises at least one channel 10 for circulation of a cooling liquid. Each plunger 11 carried by the holding device 8 are solid and have a lower part 12 with pressing surfaces 13 to be pressed into contact with the deposited mass. The plungers 11 also have upper cone-shaped parts 14 which fits into engagement with correspondingly cone-shaped support openings 15 in the holding device.

During the pressing operation cooling energy is transferred from the circulating cooling liquid in the channel 10 of the holding device 8 and via the cone-shaped engagement to the solid plungers 11 and further to the mass. The plungers may be dismantled or replaced without the necessity for closing off the cooling channels of the holding device 8.

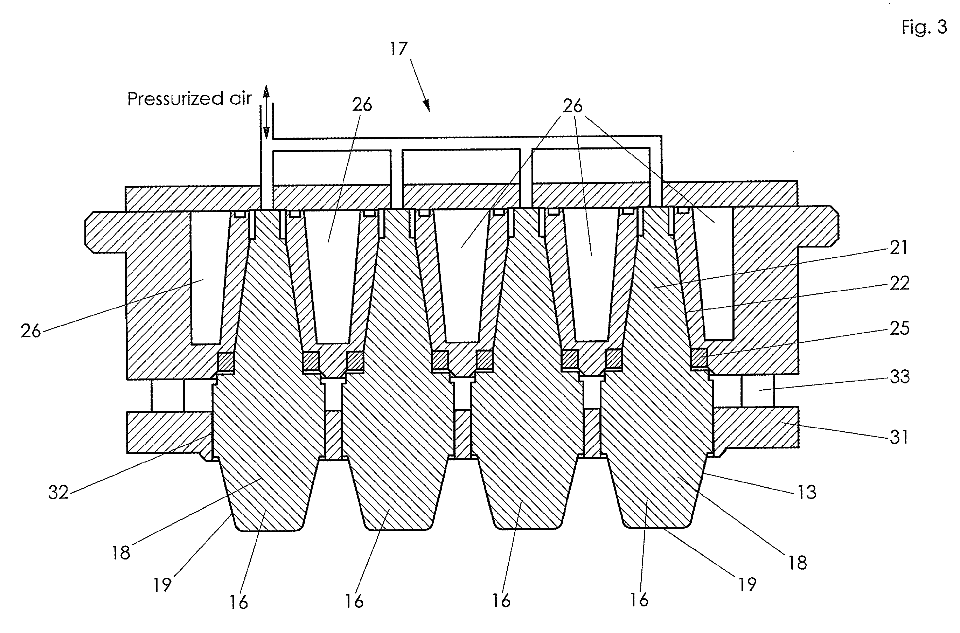

In figure 3 and 4 is disclosed another embodiment by which the arrangement of the plungers 16 in the holding device 17 makes it possible for the plungers 16 to work as independently suspended plungers, however yet being capable of utilizing the inventive idea of the cone-shaped engagement for optimal transfer of cooling energy.

Each plunger 16 has a lower part 18 with pressing surfaces 19 to be pressed into contact with the mass 20 in the mould cavity 5. Each plunger 16 also comprises an upper part 21 with cone-shaped surfaces 22 supported by opposite cone-shaped surfaces 23 of openings 24 in the holding device 17.

When the cone-shaped surfaces 22 of the upper plunger part 21 is out of engagement with the correspondingly cone-shaped surfaces 23 of the supporting openings 24 of the holding device 17 the plungers are free to move a few millimetres up and down against the resilient pressure force of spring means such as a gasket 25.

Arranging the plungers 16 independently suspended from the holding device 17 requires that release means such as for example pressurized air, spring means or mechanical means are adapted to release the engagement between the cone-shaped surfaces before the plungers 16 are immersed into the deposited chocolate mass. The plungers then works independently suspended during the pressing operation, so that each plunger 16 is free to work independently of the other plungers and to take in its own height position determined by the actually deposited amount of chocolate and the actual chocolate accommodation volume of the corresponding mould cavity 5.

When the pressing operation is concluded, the plungers 17 are withdrawn from the pressed articles 20 as the holding device 17 is lifted up. In that position intermediary two each other following pressing operations the retraction means may be in the form of means for suction out the air from the gap between the engagement surfaces of the cone-shaped upper part 21 and the opening 23. The plungers 16 are then retracted into tight engagement with the cone shaped surfaces 22 of the supporting openings 23 as disclosed in figure 3. Then the cooling transfer from the cooling liquid of the channel 26 in the holding device and to the plungers 16 are optimal. The solid plungers 16 then absorb as much cooling energy as possible in the engaged position and the plungers 16 are so to say energized with cool before the next pressing operation. Thereafter, supplying pressurised air again releases the engagement between the cone-shaped surfaces and the plungers 16 are free to move independently of each other during the subsequent pressing operation. The moving of the plungers 16 in to and out of the cone engagement could also be performed by a mechanical action on the upper plunger rods 27.

Both the release means and the retraction means could advantageously be in the form of cavities and surfaces on the plungers and on the opposite surfaces of the holding device influenced by pressurized air. The pressurized air may then act to release the cone-shaped engagement before pressing and pressurized air or suction may work to force the plungers into the cooling effective cone-shaped engagement.

A counter pressure may also be obtained in the engaged position of the plungers by arranging a spring or resilient gasket around the plungers. When the upwards force exerted by the pressurized air or suction force to the plungers in the engaged position then is released, the counter force of the spring means will secure disengagement of the upper plunger parts which is then free to move as independently suspended plungers during pressing.

The apparatus may advantageously be fitted with a closure plate 31 having openings 32 through which the lower plunger parts extends, and which is movably suspended by springs 33 below the holding device 17.

The embodiment disclosed in figure 5 is identical to that of figure 4 apart from that the lower part of the plunger 28 has another shape for pressing a bottom layer 29 of mass upon an already pressed shell 20 filled with a centre mass 30.

Before a pressing operation the holding device 17 is brought in line with the next underlying mould plate 4 so that each plunger 16 is exactly above an underlying mould cavity 5 in the particular mould plate 4. During the pressing operation the conveyor 3 is stopped or the holding device is forces to run synchronously with the same speed as that of the conveyor 3. In the secondly mentioned option the holding device is retracted to its initial starting position after completion of a pressing operation and so that a new may be initiated.

Before the actual pressing operation the holding device 17 is lowered to such extend, that the closure plate 31 has come to engagement with the upper surface 32 of the underlying mould plate 4 so that safe enclosure of the pressing cavity is obtained as depicted in figure 4.

After the pressing of the articles 20 is completed, the holding device is retracted to its upper position being ready for a new pressing to follow.

During the pressing circulation of cooling liquid through the channels 26 of the holding device 17 is controlled by the schematically depicted unit 34 connected with the channels via hoses 35. The unit comprises a cooling device for keeping a constant temperature of the circulating liquid. The temperature may advantageously be as low as between +5 and - 25 degrees Celsius, however decisive is, that the temperature of the pressing surfaces is kept below the solidification temperature of the particular mass being pressed. The pressing surfaces are typically of high gloss and are free of any lubricant.

An air drying device 36 is connected to the housing 7 via a hose 37 and is adapted to blow or circulate dry air through the housing 7. The humidity may be lowered to such extent, that no condensation is created on the pressing surfaces of the plungers whatever the temperature of the pressing surfaces may be. However, for the pressing of some masses it may also be desirable, that the dewpoint-temperature of the air is slightly above the surface temperature of the pressing surfaces. Decisive is that the humidity is regulated in accordance with the actually required need for the articles to be pressed.

By the embodiment disclosed in figure 5, the mould plates 4 with the ready pressed shells 20 or articles are moved on through the centre filling section 2, at which an optional centre mass such as cream or a crunchy mass 30 is deposited into the inner cavity of each shell 20. Advantageously, the mould plates 4 passes over a shaking table 6 for obtaining secure spreading of the centre mass 30 in the shell 20.

Thereafter, the mould plates passes into a further station for depositing a chocolate covering 29 on to the articles for closing of the centre mass 30. The mould plate 4 moves on into the final bottom covering pressing station inside a housing 7. The station is in principle identical to the station 1 apart from that the lower plunger parts have been replaced by some with flat pressing surfaces for pressing of the covering 29.

Then the station comprises a holding device 17 functioning in exactly the same manner as that of station 1

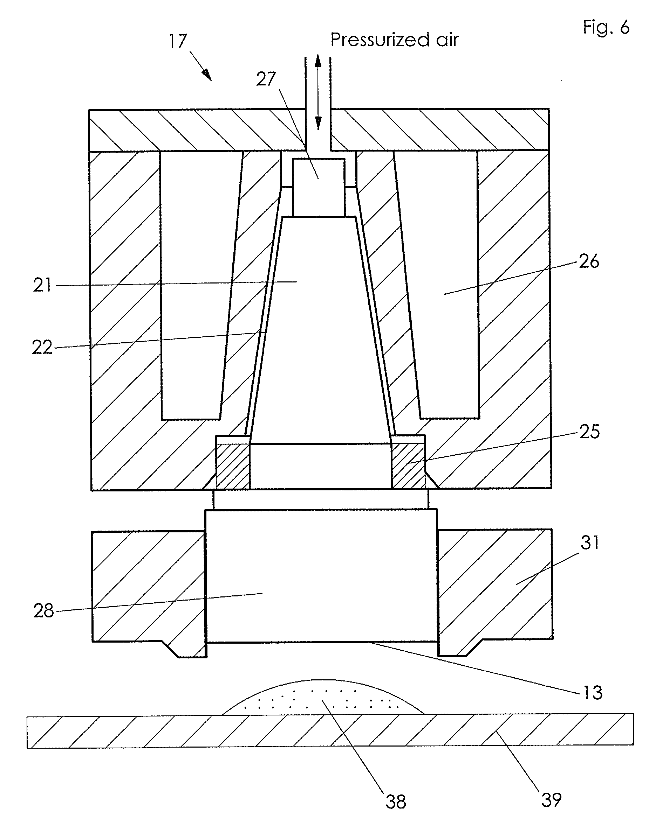

Another example of an embodiment according to the invention is disclosed in figure 6, which is adapted to press a coin-like or flat article from lumps of mass 38 deposited directly upon a conveyor 39. The holding device and plungers could in principal be identical to that of figure 5. When the holding device is lowered the closure plate 31 comes to rest upon the conveyor and a pressing enclosure is created. The plungers may have many other configurations than a planar bottom surface as long as the inventive idea of the cone-shaped engagement is utilised for achieving optimal transfer of cooling to the plungers.

## Claims

1. Apparatus for pressing edible articles (20) comprising a holding device (8, 17) with at least one channel (10, 26) for circulation of cooling liquid and carrying solid plungers (11, 16, 28) having a lower part (18) with pressing surfaces (13) to be pressed into contact with the chocolate mass (20,38) as well as having an upper part (14, 21) supported by openings (15, 24) in the holding device (17),
**characterized in,**
**that** the upper parts (14,21) of the plungers (11, 16, 28) are cone shaped and fits into engagement with correspondingly cone shaped surfaces (22) of the supporting openings (15, 24) in the holding device (8, 17).

2. Apparatus according to claim 1, **characterised in, that** release means (24, 25, 27) are arranged in the holding device (17) for releasing the tight engagement between the outer cone shaped surfaces of the upper plunger parts (21) and the inner cone shaped surfaces of the support openings (24).

3. Apparatus according to claim 1, **characterised in, that** the plungers (16, 28) are independently suspended from the holding device (17) and that retraction rods (27) or pressurized air means are arranged adapted to retract the cone-shaped plungers into tight engagement with the cone-shaped openings (24) of the holding device.

4. Apparatus according to claim 1, **characterised in, that** the apparatus comprises a closure plate (31) having openings through which the lower plunger parts (18) extends, and which is movably suspended (33) below the holding device (17).

5. Apparatus according to claim 1, **characterised in, that** the apparatus (1) comprises a housing (7), wherein the holding device (8) is arranged.

6. Apparatus according to claim 1, **characterised in, that** the apparatus (1) comprises an air drying device (36), which is adapted to blow dry air into the housing (36) around the pressing surfaces (13) of the lower plunger parts (18).

7. Apparatus according to claim 1, **characterised in, that** the apparatus is adapted to keep the temperature of the pressing surfaces (13) below the solidification temperature of the tempered chocolate mass during the pressing thereof by circulation of cooling liquid through the channels (26) of the holding device (17).
